# EUROPEAN PATENT SPECIFICATION

(11) **EP 3 254 353 B1**
(45) Date of publication and mention of the grant of the patent: **17.08.2022**
(21) Application number: 16703828.0
(22) Date of filing: 03.02.2016
(51) Int. Cl.: H05B 47/10, H05B 47/20, H02J 9/06, H02J 13/00, H05B 47/105, H05B 47/11, H05B 47/19

(54) **WIRELESS CONTROL AND SENSING APPARATUS AND METHOD FOR AN EMERGENCY LUMINAIRE**
VORRICHTUNG UND VERFAHREN ZUR DRAHTLOSEN STEUERUNG UND MESSUNG FÜR EINE NOTLEUCHTE
APPAREIL ET PROCÉDÉ DE COMMANDE ET DE DÉTECTION SANS FIL POUR UN LUMINAIRE D'URGENCE

(30) Priority: 04.02.2015 GB 201501858
(43) Date of publication of application: 13.12.2017
(73) Proprietor: WI-Innovate Ltd., Guildford, Surrey GU23 7EB (GB)
(72) Inventor: AVERY, David, Guildford Surrey GU23 7EB (GB)
(74) Representative: Cork, Robert
(86) International application number: PCT/GB2016/050243
(87) International publication number: WO 2016/124917

(56) References cited:
- US-A- 6 010 228
- US-A1- 2002 080 027
- US-A1- 2005 202 785
- US-A1- 2010 237 781
- US-A1- 2014 097 758
- US-B1- 6 754 602

## Description

### Technical Field

The present invention relates to wirelessly controlling an emergency luminaire, and sensing one or more conditions at the emergency luminaire.

### Background of the Invention

Emergency lighting systems can generally be divided into two types: centrally supplied emergency luminaires; and self-contained emergency luminaires. A centrally supplied emergency luminaire can be used for maintained or non-maintained operation, and is energised from a central emergency power system that is not contained within the luminaire. Only the lamp (and an inverter if a fluorescent lamp is used) is located within the luminaire body, with the supply on power failure being fed from a centralised location.

A self-contained emergency luminaire can also be used for maintained or non-maintained emergency lighting. In a self-contained emergency luminaire, all the components, such as the battery, charging circuit, mains ballast, lamp, control unit, test and monitoring facilities are contained within the luminaire or adjacent to it, for example within 1 metre cable length. Additionally, a key switch, circuit breaker or isolation switch to isolate the mains power to the emergency luminaire may be located further than 1 metre away from the luminaire. In the United Kingdom, for example, the majority of systems are of the self-contained type.

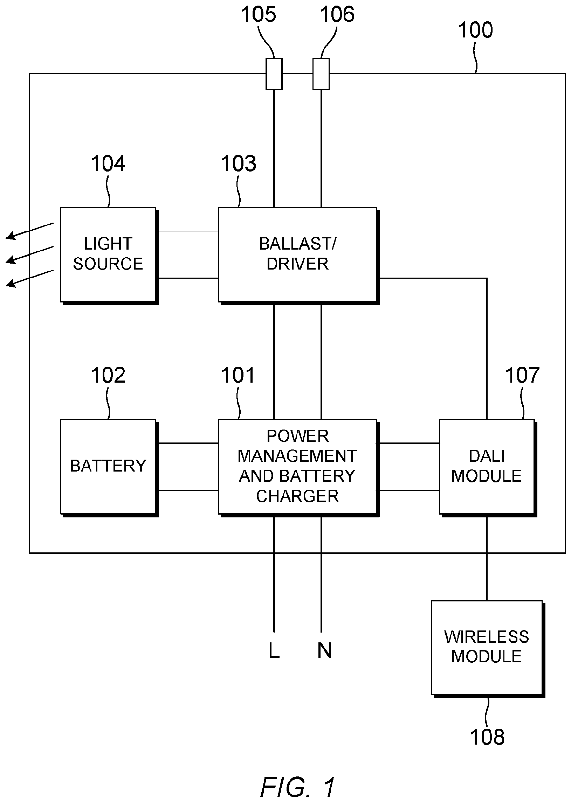

An example of a prior art self-contained emergency luminaire is illustrated in Fig. 1. The luminaire 100 comprises a power management and battery charger unit 101 that is configured to receive AC mains or DC supply power, and a battery 102 that is charged from the mains supply power via the power management and battery charger unit 101. The power management and battery charger unit 101 is further configured to manage the switchover between the mains supply and the battery supply in the event of a mains failure. The luminaire 100 further comprises a ballast/driver 103 that receives power from the power management and battery charger unit 101, and a light source 104 that is powered by the ballast/driver 103. Additionally, the luminaire 100 comprises a charge LED 105 which indicates that there is a mains supply and the battery is being charged, and an optional test switch 106 which can be activated during testing to simulate a mains failure and cause the light source 104 to be operated from the battery 102.

To enable luminaires to be remotely controlled, systems such as the Digital Addressable Lighting Interface (DALI) have been developed. In the example illustrated in Fig. 1, the luminaire 100 includes a DALI module 107 connected to the power management and battery charger unit 101 and the ballast/driver 103. The DALI module 107 can provide information about the emergency light operational characteristics such as the lamp status, battery status and pass/fail reporting to a central DALI controller either through a wired interface bus, or via a wireless module as in the present example. Connecting a wireless module to a DALI emergency light removes the need for the additional cabling, but has the increased cost of requiring the emergency light to have a DALI interface plus the cost of wireless module and the associated increased power consumption it brings.

US 2014/0097758 A1 discloses a wireless lighting module including a light source, a controller configured to control illumination of the light source, a connector configured to provide power to an external device, and a battery configured to supply power to the light source, controller and connector.

The invention is made in this context.

### Summary of the Invention

According to a first aspect of the present invention, there is provided apparatus according to claim 1.

The apparatus can be configured to be retro-fitted to the emergency luminaire, and the power monitoring module can comprise: a first connector configured to be removably connected to a terminal of a battery charging unit of the emergency luminaire; and a second connector configured to be removably connected to the battery. The emergency luminaire maybe a standard self-contained emergency light, as described above, or may be a standard luminaire that includes an emergency lighting feature, or may be an upgrade kit for converting a standard non-emergency lighting luminaire to be operable as an emergency lighting luminaire.

The power monitoring module can further comprise a power supply unit configured to receive electrical power from the battery, and to supply electrical power to one or more components of the apparatus, including the wireless communication module.

The apparatus may be configured to execute an emergency light testing routine in which the switch is opened to interrupt the supply of mains power to the emergency luminaire, wherein after a predefined testing period the apparatus can be configured to control the power monitoring module to measure an amount of power remaining in the battery, and transmit information about the amount of power remaining over the network via the wireless communication module.

The apparatus may further comprise sensor interface means for receiving data from one or more sensors arranged to monitor an environmental condition in the vicinity of the emergency luminaire, wherein the wireless communication module is configured to transmit information relating to the environmental condition in the vicinity of the emergency luminaire over the network via the wireless communication module, based on the data received through the sensor interface.

The apparatus may further comprise processing means configured to receive data from the one or more sensors via the sensor interface means, and to control the apparatus in accordance with the received data.

The one or more sensors can include at least one of: a temperature sensor; a smoke sensor; a humidity sensor; a motion sensor; a microphone; an air quality sensor; a light sensor arranged to detect light emitted by the luminaire or the ambient light level around the area; and a camera sensor configured to capture an image.

The apparatus may further comprise output interface means for controlling one or more output devices.

The one or more output devices can include light emitting means, and the apparatus can be configured to control the light emitting means via the output interface means to emit light of a first wavelength in response to an unsafe environment being detected in the vicinity of the emergency luminaire, and to control the light emitting means via the output interface means to emit light of a second wavelength in response to a safe environment being detected in the vicinity of the emergency luminaire. The light emitting means may be configured to emit visible and/or infra-red light.

The apparatus can further comprise processing means configured to search for one or more predefined indicators of an unsafe environment in the data received from the one or more sensors, and determine that the environment in the vicinity of the emergency luminaire is unsafe in response to one of the predefined indicators being detected. The processing means may be remote from the emergency luminaire, for example the processing means may be embodied as a central controller configured to communicate wirelessly with one or more of the wireless communicate modules connected to one or more emergency luminaires. Instead of, or in addition to, a remote central controller, the apparatus may include local processing means for performing the determination. For example, the local processing means may be used as a back-up in the event that the wireless communication module is unable to communicate with a remote central controller.

The apparatus can be configured to participate in the Internet of Things by relaying signals to/from the network and one or more wireless-enabled devices in the vicinity of the apparatus. For example, the apparatus can be configured to act as a router/ coordinator/repeater/ node in the Internet of Things.

According to a second aspect of the invention, there is provided a method according to claim 13.

The method may further comprise: after detecting the first current and/or voltage characteristic indicating that a light source of the emergency luminaire has turned off, controlling the switch to resume the supply of electrical power to the emergency luminaire from the lighting circuit; using the power monitoring module, detecting a second current and/or voltage characteristic indicating that the battery has been charged; recording the time at which the second current and/or voltage characteristic was detected; and determining a total charging time of the battery as the total time elapsed between the time at which the first current and/or voltage characteristic was detected and the time at which the second current and/ or voltage characteristic was detected.

A computer-readable storage medium can be arranged to store computer program instructions which, when executed by one or more processors, perform any of the methods disclosed herein.

### Brief Description of the Drawings

Embodiments of the present invention will now be described, by way of example only, with reference to the accompanying drawings, in which:
Figure 1 illustrates a self-contained emergency luminaire including a DALI module with optional wireless module;
Figure 2 illustrates apparatus for wirelessly controlling a luminaire, according to an embodiment of the present invention;
Figure 3 is a graph illustrating voltage and current curves during a battery discharge and charge cycle of a self-contained emergency luminaire, according to an embodiment of the present invention; and
Figure 4 illustrates a network comprising a plurality of wireless-enabled self-contained emergency luminaires, according to an embodiment of the present invention.

### Detailed Description

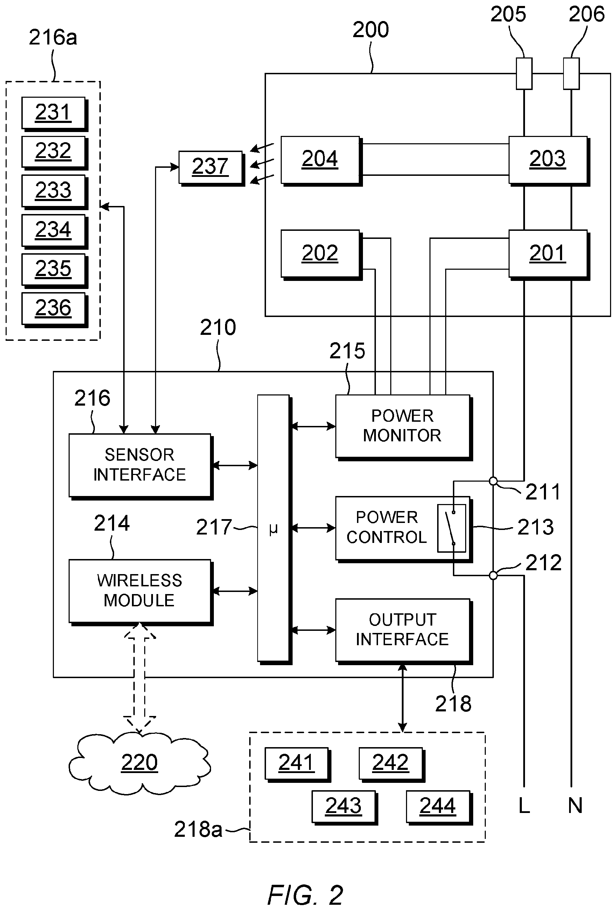

Referring now to Fig. 2, apparatus for wirelessly control and sensing of an emergency luminaire is illustrated according to an embodiment of the present invention. The apparatus may be referred to as a wireless control/sensing module. The luminaire 200 is similar to the luminaire illustrated in Fig. 1, but does not include a DALI module. The luminaire 200 is a self-contained emergency luminaire comprising a power management and battery charger unit 201, battery 202, ballast/driver 203, light source 204, charge LED 205, and optional test switch 206.

The apparatus 210 comprises a first electrical terminal 211 connectable to a power terminal of the luminaire 200, and a second electrical terminal 212 connectable to a lighting circuit for supplying electrical power to the luminaire. In the present embodiment, the first and second electrical terminals 211, 212 are connected between the luminaire 200 and the live (L) conductor in the lighting circuit, but in another embodiment the first and second electrical terminals 211, 212 can be connected between the luminaire 200 and the neutral (N) conductor.

The apparatus 210 further comprises a power control unit 213 comprising a switch connected between the first and second electrical terminals 211, 212, and a wireless communication module 214 configured to communicate wirelessly with a network 220. By opening and closing the switch, the power control unit 213 can control the supply of electrical power to the luminaire 200 from the lighting circuit. Since the switch is connected between the mains power source and the luminaire power terminal, the apparatus 210 can be installed without any modification of the luminaire 200. This approach enables the apparatus to be retro-fitted to conventional luminaires which do not include a DALI interface. Embodiments of the invention therefore provide a convenient, low-cost solution for adding wireless control capabilities to standard emergency luminaires. The emergency luminaire may be a luminaire that can be used for both emergency and non-emergency lighting, for example, a standard luminaire that includes an emergency lighting capability.

The apparatus 210 is configured to control the switch in accordance with a control signal received from the network 220, so as to control the supply of electrical power to the luminaire from the lighting circuit. The apparatus therefore enables the emergency luminaire to be wirelessly controlled. For example, when testing an emergency lighting system, the switch can be opened by transmitting a command wirelessly to the apparatus 210 over the network, to interrupt the supply of mains electrical power to the luminaire 200 and thereby simulate a power failure condition.

In addition to the ability to wirelessly control the supply of mains electrical power to the luminaire 200, the apparatus 210 of the present embodiment includes other features which provide enhanced functionality in comparison to conventional arrangements. As shown in Fig. 2, the apparatus 210 further comprises a power monitoring module 215 connectable to the luminaire battery 202, configured to measure an output voltage and/or current of the battery 202, and/or the input voltage and/or current to the power management and battery charger unit 201. The input voltage and/or current provided to the power management and battery charger unit 201 may differ from the battery output voltage/current when the battery 202 also provides power to other components, for example, when the wireless control/sensing module 210 is drawing power from the luminaire battery 202.

In conventional self-contained luminaires, the battery is normally connected via a plug- and-socket connector to enable the battery to be removed and replaced. In the present embodiment, the apparatus 210 includes suitable removable connectors to enable the power monitoring module 215 to be removably connected between the power management and battery charger unit 201 and the battery 202 of the luminaire. This enables the apparatus 210 to be easily retro-fitted to a conventional luminaire 200 without requiring any special modification of the luminaire 200 and still allows the battery to be easily replaced when required.

In the present embodiment, the power monitoring module 215 is configured to be electrically connected in series between the luminaire battery 202 and the battery charger unit 201. This electrical arrangement allows the power monitoring module 215 to measure both the battery voltage and current. For example, the current can be measured by measuring the voltage drop across a known resistor. However, in other embodiments the power monitoring module 215 can be configured to be electrically connected in parallel with the battery 202, for example by using self-stripping connectors to splice onto the cable which connects the battery 202 to the battery charger unit 201. In embodiments where the power monitoring module 215 is electrically connected in parallel an alternative method of measuring the battery current may be employed, for example the power monitoring module 215 can include a Hall Effect current transformer arranged to measure the battery current.

Additionally, the power monitoring module 215 can comprise a power supply unit configured to receive electrical power via the connection between the luminaire power management and battery charger unit 201 and the battery 202, and to supply electrical power to one or more components of the apparatus, including the wireless communication module. Specifically, during normal operation when mains power is available, the power monitoring module 215 can draw power from the luminaire power management and battery charger unit 201, and during emergency operation the power monitoring module 215 can draw power from the luminaire battery 202. This enables the wireless control/sensing module 210 to continue to receive power in the event of a mains failure. In some embodiments, the wireless control/sensing module 210 can also be configured to alert a central controller in response to the power monitoring module 215 detecting that the emergency luminaire has begun draining the battery, indicating that mains power to the emergency luminaire has been cut off. This feature can enable a facilities manager to automatically identify power failures at individual luminaires across a building-wide emergency lighting network. In addition, the power monitoring module 215 can continue to provide data relating to the battery charge level after the mains failure has occurred. For example, this data may be submitted when making an insurance claim as evidence that the emergency luminaire continued to function for a certain time after mains power was lost.

Depending on the embodiment, the wireless control/sensing module 210 can also be configured to draw power via the mains lighting circuit, or can be configured to always draw power via the luminaire battery 202. For example, in a central battery system the battery power supply may only be activated when mains power is unavailable, in which case the wireless control/sensing module 210 can be configured to draw power from the mains lighting circuit during normal operation, and from the central battery during emergency operation.

Additionally, in some embodiments the apparatus can be configured to participate in the Internet of Things by relaying signals to/from the network and one or more wireless-enabled devices in the vicinity of the apparatus. Since emergency luminaires will usually be evenly distributed throughout an environment such as a building, in order to provide sufficient lighting during an emergency, embodiments of the present invention can enable the creation of a distributed wireless network within the environment to connect other wireless-enabled devices to the network, in addition to enabling wireless control of the emergency luminaires themselves. In this way, embodiments of the invention can act as the infrastructure necessary to support the deployment of the Internet of Things. Furthermore, by enabling wireless control and sensing of the emergency luminaires, embodiments of the invention can significantly reduce the time and cost associated with the regular emergency lighting tests that are required by legislation, since the emergency luminaires can be electrically isolated and tested remotely. Accordingly, the cost of purchasing and installing the wireless modules can be offset by savings made by automating the highly labour intensive emergency lighting compliancy testing.

Continuing with reference to Fig. 2, the apparatus 210 further comprises sensor interface means 216 for receiving data from a plurality of environmental sensors 216a configured to monitor an environmental condition in the vicinity of the luminaire 200. The apparatus 210 is configured to transmit, via the wireless communication module 214, information relating to the environmental condition in the vicinity of the luminaire 200 to the wireless network 220, based on the data received through the sensor interface means 216. For example, the apparatus 210 may simply relay data directly from a sensor to the network 220 or may modify the sensor data before transmission, for example by compressing the sensor data.

Depending on the embodiments, the environmental sensors 216a maybe physically included in the same body as the apparatus 210, or may be separate. The environmental sensors 216a may communicate with the sensor interface means via any suitable wired or wireless connections. In the present embodiment the plurality of environmental sensors 216a includes a temperature sensor 231, a smoke sensor 232, a humidity sensor 233, a motion sensor 234, a microphone 235, and a camera sensor 236 configured to capture an image. Although six environmental sensors are illustrated in Fig. 2, in other embodiments any number of sensors may be provided. That is to say, in general the sensor interface means 216 can be configured to communicate with one or more environmental sensors. Furthermore, in other embodiments the sensor interface 216 may be omitted entirely, if environmental monitoring is not required.

In addition to environmental sensors, the sensor interface means 216 can be configured to communicate with other types of sensors. In the present embodiment, the apparatus further comprises a light sensor 237 arranged to detect light emitted by the light source 204. The sensor interface means 216 is configured to communicate with the light sensor 237, and receive data from the light sensor 237. The data from the light sensor 237 can be used to determine whether the light source 204 is functioning correctly, by verifying that the light source 204 is emitting light.

In addition to the above-mentioned sensors, other types of sensors that can be included in other embodiments of the present invention include, but are not limited to: an ambient light level sensor; a proximity sensor; carbon dioxide (CO₂) sensor; carbon monoxide (CO) sensor; air quality sensor. Embodiments of the invention can therefore enable detailed information about environmental conditions to be obtained at known locations within a building or other environment, when apparatus such as that shown in Fig. 2 is fitted to a plurality of luminaires distributed throughout the environment being monitored, since the location of each emergency luminaire is fixed and can be programmed into the system during installation/configuration. Depending on the embodiment, the apparatus 210 can be configured to transmit sensor data to the network 220 periodically, in real-time, or in response to a request from another device. When the apparatus 210 transmits data in real-time, that is, immediately upon receipt of the data through the sensor interface means 216, it may not be necessary to record the data locally at the luminaire since data from a plurality of luminaires can be received and recorded centrally. This enables the cost and complexity of the apparatus to be kept to a minimum, since it is not necessary for high-capacity local storage to be provided in the apparatus.

In some embodiments the sensor interface means 216 can be configured to communicate with a Radio Frequency Identification (RFID) reader for reading data from an RFID device when commissioning the emergency lighting system. Furthermore, in some embodiments the sensor interface means 216 can be configured to be connected to a switch, or other suitable device, that when activated causes the wireless control/sensing module to transmit a signal to a central controller over the wireless network. The signal can include information identifying the location of the emergency luminaire. For example, the switch can be used as a panic alarm to trigger an alert at the central controller, or could be activated by a security guard while patrolling the building to track their patrol route and current location, or could be activated by personnel during an emergency situation to indicate their location to the central controller.

In some embodiments of the invention the apparatus can be used for security monitoring purposes. For example, prior art gunfire detection solutions use heat and sound to detect gunfire, and can be used to automatically alert police and enable armed officers to track and follow gunmen within a building. Such detectors are typically installed in hospitals, schools, universities, museums, shopping centres and government buildings. However, dedicated gunfire detection systems are expensive. In embodiments of the present invention, the wireless sensing/control modules can be used to implement a gunfire detection system by programming each wireless sensing/control module to detect light flashes and/or sounds that are characteristic of a firearm being discharged, and to activate an alarm system if gunfire is detected. In another embodiment, the light and/or sound data can be relayed directly to a central controller, which is configured to analyse the data from one or more of the apparatuses to detect gunfire. This enables a gunfire detection system to be deployed in circumstances where an existing dedicated network of gunfire detectors would not be financially viable.

In addition to the sensor interface means 216, the apparatus 210 of the present embodiment further comprises processing means 217, and an output interface 218. The processing means 217 can control functions performed by the apparatus 210, and can include one or more processors and computer-readable memory configured to store computer program instructions that can be executed by the one or more processors. The output interface 218 is configured to control one or more output devices 218a via any suitable wired or wireless interface. In the present embodiment, the output interface 218 is configured to control a speaker 241, a first light source 242 configured to emit green light, a second light source 243 configured to emit red light, and/or an infra-red light source 244. The first and second light sources 242, 243 and infra-red light source 244 can be any suitable light source, including but not limited to incandescent bulbs, fluorescent lamps, halogen lamps, and light emitting diodes (LEDs).

Examples of other output devices that may be controlled by the apparatus in other embodiments include, but are not limited to: display units such as a liquid crystal display (LCD) or organic light emitting diode (OLED) display; actuators; relays; and valves. Furthermore, in some embodiments the output interface can be configured to send output data to another device. Examples of types of output data that can be sent via the output interface include, but are not limited to: set points; thresholds; variables; parameters; equations; and limits.

In the present embodiment, the processing means 217 is configured to receive data from the plurality of sensors 216a, 237 via the sensor interface means 216, and control the luminaire 200 and/or one or more of the output devices 218a in accordance with the sensor data. For example, the processing means 217 can be configured to search for one or more predefined indicators of an unsafe environment in the data received from the sensors 216a, and determine that the environment in the vicinity of the luminaire 200 is unsafe in response to one of the predefined indicators being detected. Furthermore, in some embodiments the apparatus 210 can be configured to receive an alarm message from the network 220, for example from another wireless-enabled luminaire or from a central controller. The alarm message can indicate to the apparatus 210 that the environment in the vicinity of the luminaire 200 is unsafe. For example, an unsafe condition may have been reported by a person in the vicinity of the luminaire 200 or from another system such as the fire detection system or security cameras.

Although in the present embodiment the processing is performed locally, in other embodiments the sensor data may be transmitted to a central controller over the wireless network 220, to be processed remotely. When the apparatus is configured to locally process data, this offers the advantage that the apparatus can continue to function and respond to new sensor data even when the wireless link back to the central controller is compromised. In some embodiments, the apparatus may be configured to prioritise control signals received from the network over any locally-generated control signals, to ensure that the apparatus functions can always be overridden remotely in the event of an emergency. Furthermore, in some embodiments a distributed computing approach can be used in which the processing burden is shared among several processors in nearby wireless control/sensing modules.

Examples of indicators of an unsafe environment may include sound, heat, smoke, vibration or light signatures that are characteristic of a hazardous condition such as a fire being detected by the sensors 216a. Another example of a hazardous condition that can be detected in embodiments of the present invention is gunfire, as described above. Yet another example is threatening human behaviour, which may be detected by analysing audio and/or video captured by the sensors 216a, for example by searching in captured audio for occurrences of threatening words or phrases, or other vocal characteristics such as shouting or screaming, or searching in captured video for aggressive gestures by a person in the vicinity of the luminaire 200. It will be appreciated that these are merely a few examples of types of unsafe environment that can be detected in embodiments of the present invention, and the invention is not limited to these examples.

In response to an unsafe environment being detected, the processing means 217 can be configured to execute an emergency lighting routine in which light and/or sound emitting means are controlled via the output interface means 218 to signal whether or not the environment in the vicinity of the luminaire is safe. In the present embodiment the light emitting means comprises the first and second light sources 242, 243. However, in other embodiments however different light emitting means may be provided, for example infra-red, an LCD or OLED display. For example, the processing means 217 can be configured to control the second light source 243 to emit red light as a warning that the environment in the vicinity of the luminaire 200 is unsafe, in response to an unsafe environment being detected. The light emitting means may be configured to emit visible and/or infra-red light. For example, infra-red light can be used to guide emergency services in a smoke-filled environment, since infra-red wavelengths can be detected through smoke using night vision equipment.

The emergency lighting routine may also, or alternatively, include playing a recorded audio message over the speaker 241 to notify users in the vicinity of the luminaire 200 that a possible fire or other hazard has been detected. In some embodiments, instead of or in addition to a recorded audio message, the apparatus may be configured to play audio data received over the network, for example to allow emergency services to communicate with people trapped inside a building. Two-way communication may also be possible if the sensors include a microphone. As a further example, in some embodiments the system can be configured to guide visually impaired persons via suitable audio cues such as beeps.

Executing the emergency lighting routine could also include transmitting an alarm message to the network, which can be received by other luminaires and/or a central controller, to indicate that an unsafe environment has been detected. In this way, detection of a hazardous condition at one luminaire can trigger an emergency lighting routine throughout the environment being monitored, such as an office building. In the above-described example in which red light is used to signal an unsafe environment, when the emergency lighting routine is being executed an individual luminaire can control the luminaire and/or the light emitting means to emit a different colour of light, for example green light, if the environment in the vicinity of the luminaire is determined to be safe. In this way, a network of wireless-enabled luminaires can automatically guide individuals towards a safe area. For example, the light emitting means in several wireless control/sensing modules can be controlled to flash in sequence to indicate the path towards a safe exit.

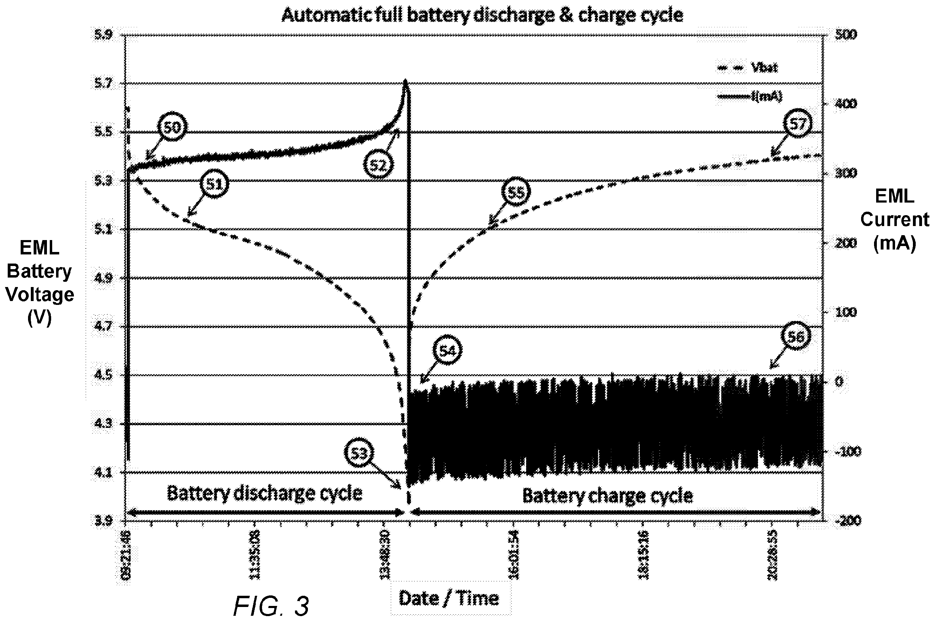

An example of the battery monitoring capabilities of the embodiment shown in Fig. 2 will now be described with reference to Fig. 3, which is a graph illustrating voltage and current curves obtained by the power monitoring module 215 during a battery discharge and charge cycle of the luminaire 200. As described above, the power monitoring module 215 is configured to measure an output voltage and/or current of the battery 202 to determine the remaining power stored in the battery 202. However, in other embodiments only one of the voltage or current may be measured.

The apparatus 210 can also be configured to transmit information about the measured output voltage and/or current over the network 220 via the wireless communication module 214, to enable the battery charge level to be monitored remotely. In the present embodiment, the apparatus measures the current (I) and voltage (V) curves shown in Fig. 3 during an emergency light testing routine in which the switch is opened to interrupt the supply of mains power to the luminaire 200. The luminaire then automatically switches to battery power, and the power monitoring module 215 is configured to record I and V data as the battery 202 discharges. The I and V data may be recorded continuously or intermittently during the emergency light test. The apparatus 210 can then transmit the recorded data back to a central controller over the network 220.

As shown in Fig. 3, the ballast current begins to increase (point 50) and the battery voltage begins to drop (point 51) as the battery 202 begins discharging. The wireless control/sensing module 210 can be configured to automatically record the start time and date at which the test begins. At the point at which the battery voltage falls below the minimum input supply voltage (point 53) to the emergency lighting ballast the emergency light turns off. This can be detected by the characteristic decrease in current and increase in battery voltage. One or both of the voltage and/or current transition (points 52 and 53) can be used as a trigger by the wireless control/sensor module 210 to determine that the discharge cycle is complete, at which point the wireless control/sensor module 210 records the end time and date. The start time and date can then be subtracted from the end time and date to determine the full battery discharge time recorded during the test. This calculation can be performed locally at the wireless control/sensing module 210, or remotely at a central control unit. The system then automatically returns the emergency light to the charging cycle by closing the switch to reconnect the mains supply to the emergency luminaire 200 and begin charging the battery (points 54-57). In some embodiments, the battery voltage and current may continue to be monitored until it returns to near the maximum battery voltage (point 57). At this point the charge cycle is complete, and the total charge cycle time can be recorded.

By remotely monitoring the battery charge level, the apparatus 210 can be remotely controlled over the network 220 to determine whether the battery capacity is sufficient to satisfy safety requirements, or whether the battery 202 is failing and should be replaced. For example, UK regulations require an emergency lighting 3 hour longevity test to be performed annually. During the 3 hour longevity test, the mains supply is disconnected from a luminaire and the internal battery must continue to provide sufficient power to illuminate the light source for a minimum of 3 hours.

In some embodiments, the apparatus may be configured to simply switch the mains supply to the luminaire on/off in response to control signals received over the network, and record I and/or V data from the power monitoring module 215 whenever the mains supply is disconnected. In other embodiments, the apparatus 210 may be configured to execute an automated test procedure in which the processing means 217 controls the power control means 213 to disconnect the mains supply for a predefined fixed time period and reconnect the mains supply after the time period has expired, for example 3 hours in the case of an annual 3-hour longevity test. Upon expiry of the time period, the apparatus 210 can be configured to automatically determine the amount of power remaining in the battery 202, and transmit information about the amount of power remaining to a central controller over the network 220, using the wireless communication module 214. This approach minimises the amount of network traffic during the automated test procedure, by only transmitting the test result rather than continuously streaming data throughout the test. The test result may be expressed as a simple pass/fail status flag in the message sent to the central controller, or may contain more detailed information about the charge level of the battery at the end of the test, to enable an operator to determine whether the battery is close to failing and should be replaced anyway. Furthermore, in some embodiments, the power monitoring module can continue to monitor the battery charge level after the time period required for the test has expired. If the battery is seen to fail a short time after the test period expires, for example after a total of 3 hours and 10 minutes, a decision may be taken to replace the battery now to ensure that the battery continues to function correctly until the next test is carried out.

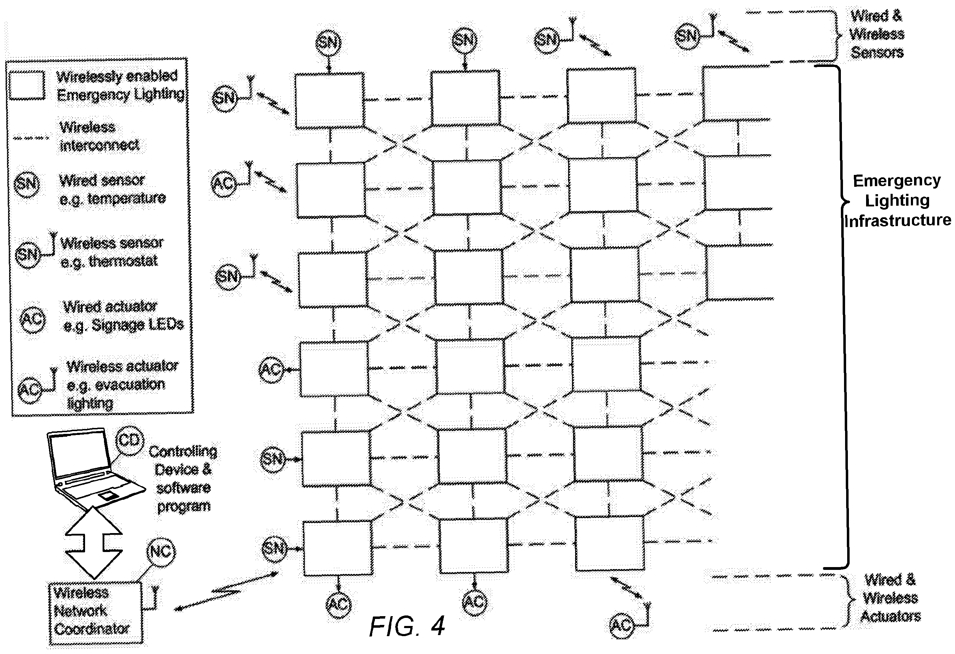

Referring now to Fig. 4, a network comprising a plurality of wireless-enabled self-contained emergency luminaires is illustrated, according to an embodiment of the present invention. The network can be used to implement various lighting routines and functions as described above, such as an emergency lighting routine when an unsafe environment is detected near one or more of the luminaires.

In the present embodiment, the system comprises one or a plurality of wireless-enabled luminaires and a central controller. The central controller is configured to execute computer program instructions, which may be stored locally or remotely, to implement the lighting routines and functions. The central controller may communicate with the network via a wired or wireless connection. The central controller can receive data from the luminaires as described above, and generate and transmit control signals to the luminaires in order to remotely control functions of the luminaire and the apparatus connected thereto. The control signals may be generated automatically by the software executed by the central controller, or may be generated in response to user input.

Embodiments of the invention have been described above in relation to self-contained emergency luminaires in an indoor environment. However, embodiments of the present invention are not limited to use with self-contained emergency luminaires. For example, in an alternative embodiment, the apparatus can be connected to a centrally-supplied emergency luminaire which does not itself include a battery. In such an embodiment, the power monitoring module 215 of the wireless control/sensing module 210 can be configured to be connected between the luminaire and the local battery which centrally supplies power to a plurality of emergency luminaires.

In another embodiment the apparatus can be connected to a standard (i.e. non-emergency lighting) luminaire, for example in an outdoor street/road fixture/luminaire. In a street lighting embodiment, the apparatus can include one or more sensors configured to provide environmental sensing capability. For example, the apparatus may include sensors for monitoring temperature and air quality in the vicinity of the street/road fixtures/luminaires. Environmental data from a plurality of wireless-enabled street/road fixtures/luminaires can be combined to provide wider area insights e.g. across a county, region, or country, to support added value services such as temperature profiling and climate change monitoring. For example, a system of wireless-enabled street/road fixtures/luminaires with temperature sensors maybe used to provide improved local weather forecasting, for example by alerting drivers to black ice conditions. In a wireless control/sensing module for a street/road fixtures/luminaires, for example, the power monitoring module 215 shown in Fig. 2 can be omitted as the street /road fixtures/luminaires may not be connected to a battery. However, in some embodiments the power monitoring module 215 may still be included, for example the street/road fixtures/luminaires may be off-grid and connected to a battery that is charged by a wind-power or solar-power generator, or other suitable means.

Embodiments of the invention have been described which enable wireless control facilities to be added to conventional luminaires. The invention may be embodied either as an integrated or a retro-fit module containing elements such as a wireless communication module radio, micro-controller, and environmental sensing and control equipment, as described above, to enable measurement of various parameters such as energy, light level, and temperature measurement, and control of various output devices. Embodiments of the invention can be applied to lighting infrastructure in any environment, including both indoor and outdoor environments. In some embodiments, the wireless communication module included in each apparatus can facilitate the deployment of the Internet of Things (IoT). In this way, the wireless network of the emergency lighting infrastructure can act as an aggregator, relay and concentrator of sensor/control data that facilitate the deployment of the IoT.

Embodiments of the present invention can provide numerous advantages over existing arrangements, including the ability to wirelessly disconnect power to a luminaire; the ability to wirelessly monitor the voltage and/or current being used by the battery and/or the light source in the luminaire; and the ability to be easily retro-fitted in to an emergency light, either internally or externally to the lighting luminaire.

Furthermore, many other advantages arise when wireless control/sensing modules such as those described herein are installed in emergency luminaires. The majority of commercial buildings require emergency lighting, which by necessity will be uniformly distributed throughout the building. Since there will typically be a one-to-many ratio of emergency lights to standard lighting, the number of wireless control/sensing modules to be installed may be relatively small, enabling a wireless network to support the Internet of Things to be deployed at relatively low cost. In addition, since emergency lighting systems include a battery backup power supply, the wireless control/sensing module can continue to receive power even when the mains supply is unavailable. This ensures that the wireless sensing/control network continues to function in an emergency situation. Embodiments of the invention can also be used to implement distributed sensing networks, for example: audio sensors can be used to detect gunfire and other audio signatures; infra-red light sources and sensors can be used to capture night-vision images in a security system; motion detectors can be used to track the movement of people within a building; smoke and/or thermal sensors can be used in a fire detection system; and secondary lighting can be provided to provide signalling/escape route guidance during an emergency.

The wireless communication modules within the emergency lighting infrastructure can be used by a signal strength, time-of-flight or time-of-arrival location system to provide asset, people and equipment tracking system.

Embodiments of the invention can provide access to both historical and real-time data of, for example, the location of people before and during an emergency, which can provide vital information to the emergency services to aid any manual rescue. The advantage of utilising the upgrade emergency lighting system with said invention to provide the wireless infrastructure, is that the batteries in the emergency lighting system must last 3 hours, meaning that the wireless network will stay in operation, delivering sensor and control data to/from the central controlling device (CD) during the emergency. This provides a unique opportunity to provide a building wide monitoring system to the emergency services on their arrival, assisting them to quickly assess the building status, identify hot spots, smoke filled zones and the presence of fire, occupants and any risk to human life, and to help prioritise the need of rescue.

The historical data may, for example, include the temperature, smoke, occupancy, CO2 level profile within the building/area in the lead-up, during after an emergency can provide the emergency services investigation teams and insurance companies invaluable insight in to the possible cause and location of, for example a fire.

Whilst certain embodiments of the invention have been described herein with reference to the drawings, it will be understood that many variations and modifications will be possible without departing from the scope of the invention as defined in the accompanying claims.

## Claims

1. Apparatus (210) for wireless control and sensing of an emergency luminaire (200), the apparatus (210) comprising:
a power control unit (213) comprising a switch connectable between a power terminal (211) of the emergency luminaire (200) and a lighting circuit (212) for supplying electrical power to the emergency luminaire;
a power monitoring module (215) connectable to a battery (202) for supplying electrical power to the luminaire in event of a mains failure, the power monitoring module being configured to measure an output voltage and/ or current of the battery; and
a wireless communication module (214) configured to communicate wirelessly with a network (220),
wherein the apparatus (210) is configured to control the switch, in accordance with a control signal received from the network, to control the supply of electrical power to the luminaire from the lighting circuit, and is further configured to transmit information about the measured output voltage and/or current of the battery (202) over the network via the wireless communication module,
**characterised in that** the apparatus (210) further comprises a controller configured to generate a control signal and transmit the control signal to the wireless communication module over the network, to remotely control the emergency luminaire, wherein the controller is configured to perform a testing routine by:
controlling the switch to interrupt the supply of electrical power to the emergency luminaire (200) from the lighting circuit (212);
recording a start time at which the supply of electrical power was interrupted; using the power monitoring module (215), detecting a first current and/or voltage characteristic indicating that a light source of the emergency luminaire has turned off; recording the time at which the first current and/or voltage characteristic was detected; and
determining a total discharge time of the battery as the total time elapsed between the start time and the time at which the first current and/or voltage characteristic was detected.

2. The apparatus of claim 1, wherein the apparatus is configured to be retro-fitted to the emergency luminaire, and the power monitoring module comprises:
a first connector configured to be removably connected to a terminal of a battery charging unit of the emergency luminaire; and
a second connector configured to be removably connected to the battery.

3. The apparatus of claim 1 or 2, wherein the power monitoring module comprises a power supply unit configured to receive electrical power from the battery, and to supply electrical power to one or more components of the apparatus, including the wireless communication module.

4. The apparatus of claim 1, 2 or 3, configured to execute an emergency light testing routine in which the switch is opened to interrupt the supply of mains power to the emergency luminaire,
wherein after a predefined testing period the apparatus is configured to control the power monitoring module to measure the battery current and/or voltage, and transmit information about the measured current and/or voltage over the network via the wireless communication module.

5. The apparatus of any one of the preceding claims, further comprising:
sensor interface means for receiving data from one or more sensors arranged to monitor an environmental condition in the vicinity of the emergency luminaire,
wherein the wireless communication module is configured to transmit information relating to the environmental condition in the vicinity of the emergency luminaire over the network via the wireless communication module, based on the data received through the sensor interface.

6. The apparatus of claim 5, further comprising:
processing means configured to receive data from the one or more sensors via the sensor interface means, and to control the apparatus in accordance with the received data.

7. The apparatus of claim 5 or 6, wherein the one or more sensors include at least one of:
a temperature sensor;
a smoke sensor;
a humidity sensor;
a motion sensor;
a microphone;
an air quality sensor;
a light sensor; and
a camera sensor configured to capture an image.

8. The apparatus of any one of the preceding claims, further comprising:
output interface means for controlling one or more output devices.

9. The apparatus of claim 8, wherein the one or more output devices includes light emitting means, and the apparatus is configured to control the light emitting means via the output interface means to emit light of a first wavelength in response to an unsafe environment being detected in the vicinity of the emergency luminaire, and to control the light emitting means via the output interface means to emit light of a second wavelength in response to a safe environment being detected in the vicinity of the emergency luminaire.

10. The apparatus of claim 9, when dependent on claim 5, 6 or 7, further comprising:
processing means configured to search for one or more predefined indicators of an unsafe environment in the data received from the one or more sensors, and determine that the environment in the vicinity of the emergency luminaire is unsafe in response to one of the predefined indicators being detected.

11. The apparatus of any one of the preceding claims, configured to participate in the Internet of Things by relaying signals to/from the network and one or more wireless-enabled devices in the vicinity of the apparatus.

12. The apparatus of any one of the preceding claims, connected to the emergency luminaire.

13. A method of wirelessly controlling and sensing an emergency luminaire, the method comprising:
receiving a control signal from a network, at a wireless communication module connected to the emergency luminaire;
controlling a switch connected between a power terminal of the emergency luminaire and a lighting circuit in accordance with the received control signal, to control the supply of electrical power to the emergency luminaire from the lighting circuit; and
using a power monitoring module connected to a battery for supplying electrical power to the luminaire in event of a mains failure, measuring an output voltage and/or current of the battery,
**characterised in that** the method further comprises performing a testing routine by:
controlling the switch to interrupt the supply of electrical power to the emergency luminaire from the lighting circuit;
recording a start time at which the supply of electrical power was interrupted;
using the power monitoring module, detecting a first current and/or voltage characteristic indicating that a light source of the emergency luminaire has turned off;
recording the time at which the first current and/or voltage characteristic was detected; and
determining a total discharge time of the battery as the total time elapsed between the start time and the time at which the first current and/or voltage characteristic was detected.

14. The method of claim 13, further comprising:
after detecting the first current and/or voltage characteristic indicating that a light source of the emergency luminaire has turned off, controlling the switch to resume the supply of electrical power to the emergency luminaire from the lighting circuit;
using the power monitoring module, detecting a second current and/or voltage characteristic indicating that the battery has been charged;
recording the time at which the second current and/or voltage characteristic was detected; and
determining a total charging time of the battery as the total time elapsed between the time at which the first current and/or voltage characteristic was detected and the time at which the second current and/or voltage characteristic was detected.

15. A computer-readable storage medium arranged to store computer program instructions which, when executed by one or more processors, perform the method of claim 13 or 14.

## Patentansprüche

1. Vorrichtung zur drahtlosen Steuerung und Erfassung einer Notleuchte (100), wobei die Vorrichtung Folgendes umfasst:
eine Leistungssteuereinheit (213), die einen Schalter umfasst, der zwischen einem Leistungsanschluss der Notleuchte und einem Beleuchtungsschaltkreis (212) zum Zuführen von elektrischem Strom zu der Notleuchte verbindbar ist;
ein Energieüberwachungsmodul (215), das mit einer Batterie (202) verbindbar ist, um der Leuchte im Falle eines Netzausfalls elektrische Energie zuzuführen, wobei das Energieüberwachungsmodul so konfiguriert ist, dass es eine Ausgangsspannung und/oder einen Ausgangsstrom der Batterie misst; und
ein drahtloses Kommunikationsmodul (214), das dazu konfiguriert ist, drahtlos mit einem Netzwerk zu kommunizieren, (220)
wobei die Vorrichtung dazu konfiguriert ist, den Schalter gemäß einem von dem Netzwerk empfangenen Steuersignal zu steuern, um die Versorgung der Leuchte mit elektrischem Strom von dem Beleuchtungsschaltkreis zu steuern, und dazu konfiguriert ist, Informationen über die gemessene Ausgangsspannung und/oder den Strom zu übertragen über das Netzwerk über das Kommunikationsmodul.
**dadurch gekennzeichnet, dass** die Vorrichtung ferner umfasst eine Steuerung, die dazu konfiguriert ist, ein Steuersignal zu erzeugen und das Steuersignal über das Netzwerk an das drahtlose Kommunikationsmodul zu übertragen, um die Notleuchte fernzusteuern., wobei die Steuerung dazu eingerichtet ist, eine Prüfroutine durchzuführen durch:
Steuern des Schalters, um die Versorgung der Notleuchte mit elektrischem Strom aus dem Beleuchtungsschaltkreis zu unterbrechen;
Aufzeichnen einer Startzeit, zu der die Stromversorgung unterbrochen wurde; Verwenden des Energieüberwachungsmoduls, Erfassen einer ersten Strom- und/oder Spannungskennlinie, die anzeigt, dass eine Lichtquelle der Notleuchte ausgeschaltet wurde;
Erfassen des Zeitpunkts, zu dem der erste Strom- und/oder Spannungsverlauf erfasst wurde; und Bestimmen einer Gesamtentladezeit der Batterie als die Gesamtzeit, die zwischen der Startzeit und der Zeit verstrichen ist, zu der die erste Strom- und/oder Spannungscharakteristik erfasst wurde.

2. Vorrichtung nach Anspruch 1, wobei die Vorrichtung dazu nachgerüstet konfiguriert ist, an der Notleuchte nachgerüstet zu werden, und das Leistungsüberwachungsmodul Folgendes umfasst:
einen ersten Verbinder, der dazu konfiguriert ist, lösbar mit einem Anschluss einer Batterieladeeinheit der Notleuchte verbunden zu werden; und einen zweiten Verbinder, der dazu konfiguriert ist, lösbar mit der Batterie verbunden zu werden.

3. Vorrichtung nach Anspruch 1 oder 2, wobei das Energieüberwachungsmodul eine Energieversorgungseinheit umfasst, die dazu konfiguriert ist, elektrische Energie von der Batterie zu empfangen und eine oder mehrere Komponenten der Vorrichtung, einschließlich des drahtlosen Kommunikationsmoduls, mit elektrischer Energie zu versorgen.

4. Vorrichtung nach Anspruch 1, 2 oder 3, konfiguriert zum Ausführen einer Notlicht-Testroutine, bei der der Schalter geöffnet wird, um die Versorgung der Notleuchte mit Netzstrom zu unterbrechen.
wobei die Vorrichtung nach einem vordefinierten Testzeitraum so konfiguriert ist, dass sie das Energieüberwachungsmodul steuert, um den Batteriestrom und/oder die Batteriespannung zu messen und Informationen über den gemessenen Strom und/oder die gemessene Spannung über das Netzwerk über das drahtlose Kommunikationsmodul zu übertragen.

5. Vorrichtung nach einem der vorhergehenden Ansprüche, ferner umfassend:
Sensorschnittstellenmittel zum Empfangen von Daten von einem oder mehreren Sensoren, die angeordnet sind, um eine Umgebungsbedingung in der Nähe der Notleuchte zu überwachen,
wobei das drahtlose Kommunikationsmodul dazu konfiguriert ist, basierend auf den durch die Sensorschnittstelle empfangenen Daten Informationen bezüglich der Umgebungsbedingungen in der Nähe der Notleuchte über das Netzwerk über das drahtlose Kommunikationsmodul zu übertragen.

6. Vorrichtung nach Anspruch 5, ferner umfassend:
Verarbeitungsmittel, die so konfiguriert sind, dass sie Daten von dem einen oder den mehreren Sensoren über die Sensorschnittstellenmittel empfangen und die Vorrichtung gemäß den empfangenen Daten steuern..

7. Vorrichtung nach Anspruch 5 oder 6, wobei der eine oder die mehreren Sensoren mindestens eines von Folgendem umfassen:
einen Temperatursensor;
ein Rauchsensor;
einen Feuchtigkeitssensor;
ein Bewegungssensor;
ein Mikrofon;
ein Luftqualitätssensor;
ein Lichtsensor; und
einen Kamerasensor, der konfiguriert ist, um ein Bild aufzunehmen.

8. Vorrichtung nach einem der vorhergehenden Ansprüche, ferner umfassend:
Ausgabeschnittstellenmittel zum Steuern eines oder mehrerer Ausgabegeräte.

9. Vorrichtung nach Anspruch 8, wobei die eine oder mehreren Ausgabevorrichtungen lichtemittierende Mittel enthalten und die Vorrichtung dazu konfiguriert ist, die lichtemittierenden Mittel über die Ausgabeschnittstellenmittel zu steuern, um Licht einer ersten Wellenlänge als Reaktion darauf zu emittieren, dass eine unsichere Umgebung darin detektiert wird in der Nähe der Notleuchte, und um die lichtemittierenden Mittel über die Ausgangsschnittstellenmittel zu steuern, um Licht einer zweiten Wellenlänge in Reaktion darauf zu emittieren, dass eine sichere Umgebung in der Nähe der Notleuchte erkannt wird.

10. Vorrichtung nach Anspruch 9, wenn abhängig von Anspruch 5, 6 oder 7, ferner umfassend:
Verarbeitungsmittel, die dazu konfiguriert sind, in den von dem einen oder den mehreren Sensoren empfangenen Daten nach einem oder mehreren vordefinierten Indikatoren einer unsicheren Umgebung zu suchen und als Reaktion darauf, dass einer der vordefinierten Indikatoren erfasst wird, zu bestimmen, dass die Umgebung in der Nähe der Notleuchte unsicher ist.

11. Vorrichtung nach einem der vorangehenden Ansprüche, konfiguriert zur Teilnahme am Internet der Dinge durch Weiterleiten von Signalen zu/von dem Netzwerk und einem oder mehreren drahtlosfähigen Geräten in der Nähe der Vorrichtung.

12. Vorrichtung nach einem der vorhergehenden Ansprüche, verbunden mit der Notleuchte.

13. Verfahren zum drahtlosen Steuern und Erfassen einer Notleuchte, wobei das Verfahren umfasst:
Empfangen eines Steuersignals von einem Netzwerk an einem drahtlosen Kommunikationsmodul, das mit der Notleuchte verbunden ist;
Steuern eines Schalters, der zwischen einem Leistungsanschluss der Notleuchte und einem Beleuchtungsschaltkreis angeschlossen ist, gemäß dem empfangenen Steuersignal, um die Versorgung der Notleuchte mit elektrischem Strom von dem Beleuchtungsschaltkreis zu steuern; und
Verwenden eines Energieüberwachungsmoduls, das mit einer Batterie verbunden ist, um der Leuchte im Falle eines Netzausfalls elektrische Energie zuzuführen, Messen einer Ausgangsspannung und/oder eines Ausgangsstroms der Batterie,
**dadurch gekennzeichnet, dass das Verfahren** ferner umfassend das Durchführen einer Testroutine durch:
Steuern des Schalters, um die Versorgung der Notleuchte mit elektrischem Strom aus dem Beleuchtungsschaltkreis zu unterbrechen;
Aufzeichnen einer Startzeit, zu der die Stromversorgung unterbrochen wurde; Verwenden des Energieüberwachungsmoduls, Erfassen einer ersten Strom- und/oder Spannungskennlinie, die anzeigt, dass eine Lichtquelle der Notleuchte ausgeschaltet wurde;
Erfassen des Zeitpunkts, zu dem der erste Strom- und/oder Spannungsverlauf erfasst wurde; und
Bestimmen einer Gesamtentladezeit der Batterie als die Gesamtzeit, die zwischen der Startzeit und der Zeit verstrichen ist, zu der die erste Strom- und/oder Spannungscharakteristik erfasst wurde.

14. Verfahren nach Anspruch 13, ferner umfassend:
nach dem Erfassen der ersten Strom- und/oder Spannungscharakteristik, die anzeigt, dass eine Lichtquelle der Notleuchte ausgeschaltet ist, Steuern des Schalters, um die Versorgung der Notleuchte mit elektrischem Strom aus dem Beleuchtungskreis wieder aufzunehmen;
Verwenden des Energieüberwachungsmoduls, Erfassen einer zweiten Strom- und/oder Spannungscharakteristik, die anzeigt, dass die Batterie geladen wurde;
Aufzeichnen des Zeitpunkts, zu dem der zweite Strom- und/oder Spannungsverlauf erfasst wurde; und
Bestimmen einer Gesamtladezeit der Batterie als die Gesamtzeit, die zwischen dem Zeitpunkt, zu dem die erste Strom- und/oder Spannungscharakteristik erfasst wurde, und dem Zeitpunkt, zu dem die zweite Strom- und/oder Spannungscharakteristik erfasst wurde, verstrichen ist.

15. Computerlesbares Speichermedium zum Speichern von Computerprogrammanweisungen, die, wenn sie von einem oder mehreren Prozessoren ausgeführt werden, das Verfahren nach Anspruch 13, oder 14 ausführen.

## Revendications

1. Appareil de commande et de détection sans fil d'un luminaire de secours (100), l'appareil comprenant:
une unité de commande d'alimentation (213) comprenant un interrupteur pouvant être connecté entre une borne d'alimentation (211) du luminaire de secours et un circuit d'éclairage (212) pour fournir de l'énergie électrique au luminaire de secours;
un module de surveillance de l'alimentation (215) pouvant être connecté à une batterie (202) pour fournir de l'énergie électrique au luminaire en cas de panne de secteur, le module de surveillance de l'alimentation étant configuré pour mesurer une tension et/ou un courant de sortie de la
batterie ; et
un module (214) de communication sans fil configuré pour communiquer sans fil avec un réseau,(220)
dans lequel l'appareil est configuré pour commander le commutateur conformément à un signal de commande reçu du réseau, pour commander l'alimentation électrique du luminaire à partir du circuit d'éclairage, et est configuré pour transmettre des informations concernant la tension et/ou le courant de sortie mesurés sur le réseau via le sans fil module de communication,
**caractérisé en ce que** l'appareil comprend en outre un contrôleur configuré pour générer un signal de commande et transmettre le signal de commande au module de communication sans fil sur le réseau, pour commander à distance le luminaire de secours, le dispositif de commande étant configuré pour effectuer une routine de test par:
commandant le commutateur pour interrompre l'alimentation électrique du luminaire de secours à partir du circuit d'éclairage ;
enregistrer une heure de début à laquelle l'alimentation en énergie électrique a été interrompue ;
à l'aide du module de surveillance de puissance, détecter une première caractéristique de courant et/ou de tension indiquant qu'une source lumineuse du luminaire de secours s'est éteinte ; enregistrer l'instant auquel la première caractéristique de courant et/ou de tension a été détectée ; et
déterminer un temps de décharge total de la batterie comme le temps total écoulé entre le temps de démarrage et le temps auquel la première caractéristique de courant et/ou de tension a été détectée.

2. Appareil selon la revendication 1, dans lequel l'appareil est configuré pour être adapté (rétro-équipé) au luminaire de secours, et le module de surveillance de l'alimentation comprend :
un premier connecteur configuré pour être connecté de manière amovible à une borne d'une unité de charge de batterie du luminaire de secours ; et
un deuxième connecteur configuré pour être connecté de manière amovible à la batterie.

3. Appareil selon la revendication 1 ou 2, dans lequel le module de surveillance de l'alimentation comprend une unité d'alimentation configurée pour recevoir de l'énergie électrique de la batterie et pour fournir de l'énergie électrique à un ou plusieurs composants de l'appareil, y compris le module de communication sans fil.

4. Appareil selon la revendication 1, 2 ou 3, configuré pour exécuter un sous-programme de test d'éclairage de secours dans lequel l'interrupteur est ouvert pour interrompre l'alimentation secteur du luminaire de secours,
dans lequel, après une période de test prédéfinie, l'appareil est configuré pour contrôler le module de surveillance de l'alimentation pour mesurer le courant et/ou la tension de la batterie, et transmettre des informations sur le courant et/ou la tension mesurés sur le reseau via le module de communication sans fil.

5. Appareil selon l'une quelconque des revendications précédentes, comprenant en outre :
moyen d'interface de capteur pour recevoir des données d'un ou plusieurs capteurs agencés pour surveiller une condition environnementale au voisinage du luminaire de secours,
dans lequel le module de communication sans fil est configuré pour transmettre des informations relatives à la condition environnementale à proximité du luminaire de secours sur le réseau via le module de communication sans fil, sur la base des données reçues via l'interface de capteur.

6. Appareil selon la revendication 5, comprenant en outre :
un moyen de traitement configuré pour recevoir des données du ou des capteurs via le moyen d'interface de capteur, et pour commander l'appareil conformément aux données reçues.

7. Appareil selon la revendication 5 ou 6, dans lequel le ou les capteurs comprennent au moins l'un de :
un capteur de température ;
un détecteur de fumée ;
un capteur d'humidité;
un capteur de mouvement ;
un microphone;
un capteur de qualité de l'air ;
un capteur de lumière ; et
un capteur de caméra configuré pour capturer une image.

8. Appareil selon l'une quelconque des revendications précédentes, comprenant en outre :
des moyens d'interface de sortie pour commander un ou plusieurs dispositifs de sortie.

9. Appareil selon la revendication 8, dans lequel le ou les dispositifs de sortie comprennent des moyens d'émission de lumière, et l'appareil est configuré pour commander les moyens d'émission de lumière via les moyens d'interface de sortie pour émettre de la lumière d'une première longueur d'onde en réponse à la détection d'un environnement dangereux dans le voisinage du luminaire de secours, et pour commander les moyens d'émission de lumière via les moyens d'interface de sortie pour émettre une lumière d'une seconde longueur d'onde en réponse à la détection d'un environnement sûr au voisinage du luminaire de secours.

10. Appareil selon la revendication 9, lorsqu'elle dépend de la revendication 5, 6 ou 7, comprenant en outre :
des moyens de traitement configurés pour rechercher un ou plusieurs indicateurs prédéfinis d'un environnement dangereux dans les données reçues du ou des capteurs, et déterminer que l'environnement au voisinage du luminaire de secours est dangereux en réponse à la détection d'un des indicateurs prédéfinis .

11. Appareil selon l'une quelconque des revendications précédentes, configuré pour participer à l'Internet des objets en relayant des signaux vers/depuis le réseau et un ou plusieurs dispositifs activés sans fil à proximité de l'appareil.

12. Appareil selon l'une quelconque des revendications précédentes, connecté au luminaire de secours.

13. Procédé de commande et de détection sans fil d'un luminaire d'urgence, le procédé comprenant :
recevoir un signal de commande d'un réseau, au niveau d'un module de communication sans fil connecté au luminaire de secours ;
commander un interrupteur connecté entre une borne d'alimentation du luminaire de secours et un circuit d'éclairage conformément au signal de commande reçu, pour commander l'alimentation électrique du luminaire de secours à partir du circuit d'éclairage ; et
utiliser un module de surveillance de puissance connecté à une batterie pour fournir de l'énergie électrique au luminaire en cas de panne de secteur, mesurer une tension et/ou un courant de sortie de la batterie,
**caractérisé en ce que le procédé** comprenant en outre l'exécution d'un sous-programme de test en :
commandant le commutateur pour interrompre l'alimentation électrique du luminaire de secours à partir du circuit d'éclairage ;
enregistrer une heure de début à laquelle l'alimentation en énergie électrique a été interrompue ;
à l'aide du module de surveillance de puissance, détecter une première caractéristique de courant et/ou de tension indiquant qu'une source lumineuse du luminaire de secours s'est éteinte ;
enregistrer l'instant auquel la première caractéristique de courant et/ou de tension a été détectée ; et
déterminer un temps de décharge total de la batterie comme le temps total écoulé entre le temps de démarrage et le temps auquel la première caractéristique de courant et/ou de tension a été détectée.

14. Procédé selon la revendication 13, comprenant en outre :
après detection de la première caractéristique de courant et/ou de tension indiquant qu'une source lumineuse du luminaire de secours s'est éteinte, commander l'interrupteur pour reprendre l'alimentation électrique du luminaire de secours à partir du circuit d'éclairage ;
à l'aide du module de surveillance de puissance, détecter une seconde caractéristique de courant et/ou de tension indiquant que la batterie a été chargée ;
enregistrer l'instant auquel la deuxième caractéristique de courant et/ou de tension a été détectée ; et
déterminer un temps de charge total de la batterie comme le temps total écoulé entre l'instant auquel la première caractéristique de courant et/ou de tension a été détectée et l'instant auquel la seconde caractéristique de courant et/ou de tension a été détectée.

15. Support de stockage lisible par ordinateur agencé pour stocker des instructions de programme informatique qui, lorsqu'elles sont exécutées par un ou plusieurs processeurs, exécutent le procédé selon la revendication 13 ou 14.
